# EUROPÄISCHE PATENTSCHRIFT

(11) **EP 4 430 334 B1**
(45) Veröffentlichungstag und Bekanntmachung des Hinweises auf die Patenterteilung: **27.08.2025**
(21) Anmeldenummer: 22817063.5
(22) Anmeldetag: 08.11.2022
(51) Int. Cl.: F16L 37/088

(54) **STECKVERBINDER ZUM VERBINDEN VON LEITUNGEN FÜR FLÜSSIGE ODER GASFÖRMIGE MEDIEN**
PLUG-IN CONNECTOR FOR CONNECTING PIPES FOR LIQUID OR GASEOUS MEDIA
RACCORD ENFICHABLE POUR RACCORDER DES TUYAUX POUR DES MILIEUX LIQUIDES OU GAZEUX

(30) Priorität: 09.11.2021 AT 508902021
(43) Veröffentlichungstag der Anmeldung: 18.09.2024
(73) Patentinhaber: Henn GmbH & Co KG., 6850 Dornbirn (AT)
(72) Erfinder: HARTMANN, Harald, 6781 Bartholomäberg (AT)
(74) Vertreter: Burger, Hannes
(86) Internationale Anmeldenummer: PCT/AT2022/060387
(87) Internationale Veröffentlichungsnummer: WO 2023/081947

(56) Entgegenhaltungen:
- WO-A1-2021/042148
- US-A1- 2020 309 298

## Beschreibung

Die Erfindung betrifft einen Steckverbinder zum Verbinden von Leitungen für flüssige oder gasförmige Medien, sowie ein Verfahren zum Herstellen einer Steckverbindung zwischen dem Steckverbinder und einem Gegensteckverbinder.

Aus der WO 2018/144902 A1, der WO 2018/102213 A1 und der EP 3 179 148 A1 sind diverse Steckverbinder bekannt. Die aus diesen Dokumenten bekannten Steckverbinder weisen den Nachteil auf, dass nicht eindeutig festzustellen ist, ob die Steckverbinder richtig miteinander gefügt sind. Ein weiterer Steckverbinder ist aus der WO 2021/042148 A1 bekannt.

Aufgabe der vorliegenden Erfindung war es, die Nachteile des Standes der Technik zu überwinden und einen Steckverbinder und ein Verfahren zum Herstellen einer Steckverbindung zwischen dem Steckverbinder und einem Gegensteckverbinder zur Verfügung zu stellen, welche die Kontrollierbarkeit der korrekten Verbindung verbessern.

Diese Aufgabe wird durch eine Vorrichtung und ein Verfahren gemäß den Ansprüchen gelöst.

Erfindungsgemäß ist ein Steckverbinder zum Verbinden von Leitungen für flüssige oder gasförmige Medien ausgebildet. Der Steckverbinder umfasst
- einen Verbinderkörper, welcher zumindest einen ersten Mantelabschnitt aufweist, welcher einen Aufnahmeraum zur Aufnahme eines Teils eines Gegensteckverbinders bildet, wobei im ersten Mantelabschnitt zumindest zwei Durchtrittsöffnungen ausgebildet sind;
- ein Arretierungselement, welches zum Sichern des Steckverbinders relativ zum Gegensteckverbinder vorgesehen ist, wobei die Durchtrittsöffnungen im Verbinderkörper zur Aufnahme des Arretierungselementes dienen.

Weiters ist ein Anzeigeelement ausgebildet, welches eine Anzeigefläche aufweist, wobei das Anzeigeelement zwischen einer Ruheposition, in der die Anzeigefläche zumindest teilweise verdeckt ist, und einer Anzeigeposition, in der die Anzeigefläche sichtbar ist, verschiebbar ist, wobei ein Federelement ausgebildet ist, welches das Anzeigeelement in Richtung der Anzeigeposition vorspannt, wobei das Anzeigeelement mit einem ersten Rastelement und einem zweiten Rastelement gekoppelt ist, wobei das erste Rastelement zum Halten des Anzeigeelementes entgegen der Federkraft des Federelementes in der Ruheposition ausgebildet ist und wobei das zweite Rastelement zum Halten des Anzeigeelementes entgegen der Federkraft des Federelementes in einer Zwischenposition zwischen der Ruheposition und der Anzeigeposition ausgebildet ist.

Der erfindungsgemäße Steckverbinder bringt den Vorteil mit sich, dass mittels des Anzeigeelementes signalisiert werden kann, dass der Gegensteckverbinder korrekt mit dem Steckverbinder gefügt ist. Insbesondere kann durch den erfindungsgemäßen Aufbau des Steckverbinders erreicht werden, dass das Anzeigeelement nur dann seine Anzeigeposition einnimmt, wenn der Gegensteckverbinder mit dem Steckverbinder gesteckt ist und gleichzeitig das Arretierungselement zur Sicherung des Gegensteckverbinders im Steckverbinder auch korrekt in der Sicherungsnut des Gegensteckverbinders eingerastet ist und somit ein unbeabsichtigtes Auseinanderziehen des Gegensteckverbinders und des Steckverbinders weiterstgehend unterbunden werden kann.

Weiters kann es zweckmäßig sein, wenn das erste Rastelement einen ersten Rastvorsprung aufweist und am Verbinderkörper eine erste Rastnase ausgebildet ist, wobei im ungesteckten Zustand des Steckverbinders der erste Rastvorsprung mit der ersten Rastnase in Eingriff steht und entgegen der Federkraft des Federelementes in der Ruheposition gehalten ist. Besonders durch einen derartigen Aufbau kann erreicht werden, dass eine Falschanzeige einer korrekten Arretierung weitestgehend unterbunden wird.

Ferner kann vorgesehen sein, dass das erste Rastelement eine erste Betätigungsnase aufweist, wobei die Betätigungsnase in den Aufnahmeraum einragt. Durch diese Maßnahme kann eine Entsicherungsmöglichkeit und somit eine Freigabemöglichkeit zur Freigabe des Verschiebens des Anzeigeelementes in seine Anzeigeposition erreicht werden.

Darüber hinaus kann vorgesehen sein, dass die erste Betätigungsnase so weit in den Aufnahmeraum einragt, dass wenn die Betätigungsnase radial aus dem Aufnahmeraum hinausgedrängt ist, der erste Rastvorsprung über die erste Rastnase gehoben ist. Durch diese Maßnahme kann eine Entsicherungsmöglichkeit und somit eine Freigabemöglichkeit zur Freigabe des Verschiebens des Anzeigeelementes in seine Anzeigeposition erreicht werden.

Vorteilhaft ist auch eine Ausprägung, gemäß welcher vorgesehen sein kann, dass das zweite Rastelement, beim Halten des Anzeigeelementes in der Zwischenposition, am Arretierungselement anliegt. Durch diese Maßnahme kann erreicht werden, dass das Anzeigeelement nur dann in seine Anzeigeposition verschoben werden kann, wenn das Arretierungselement auch tatsächlich korrekt in die Sicherungsnut eingerastet ist.

Gemäß einer Weiterbildung ist es möglich, dass das zweite Rastelement einen Rasthaken aufweist, welcher derart ausgebildet ist, dass er zum Einhaken im Arretierungselement in einer nach außen verschobenen Position des Arretierungselementes dient. Durch diese Maßnahme kann erreicht werden, dass das Anzeigeelement nur dann in seine Anzeigeposition verschoben werden kann, wenn das Arretierungselement auch tatsächlich korrekt in die Sicherungsnut eingerastet ist.

Verfahren zum Herstellen einer Steckverbindung mittels eines Steckverbinders, insbesondere mittels eines Steckverbinders nach einem der vorhergehenden Ansprüche, gekennzeichnet durch die Verfahrensschritte:
+ Bereitstellen des Steckverbinders umfassend
   - einen Verbinderkörper, welcher zumindest einen ersten Mantelabschnitt aufweist, welcher einen Aufnahmeraum zur Aufnahme eines Teils eines Gegensteckverbinders bildet, wobei im ersten Mantelabschnitt zumindest zwei Durchtrittsöffnungen ausgebildet sind;
   - ein Arretierungselement, welches zum Sichern des Steckverbinders relativ zum Gegensteckverbinder vorgesehen ist, wobei die Durchtrittsöffnungen im Verbinderkörper zur Aufnahme des Arretierungselementes dienen;
   - ein Anzeigeelement, welches eine Anzeigefläche aufweist, wobei das Anzeigeelement zwischen einer Ruheposition, in der die Anzeigefläche zumindest teilweise verdeckt ist, und einer Anzeigeposition, in der die Anzeigefläche sichtbar ist, verschiebbar ist, wobei ein Federelement ausgebildet ist, welches das Anzeigeelement in Richtung der Anzeigeposition vorspannt, wobei das Anzeigeelement mit einem ersten Rastelement und einem zweiten Rastelement gekoppelt ist, wobei das erste Rastelement zum Halten des Anzeigeelementes entgegen der Federkraft des Federelementes in der Ruheposition ausgebildet ist und wobei das zweite Rastelement zum Halten des Anzeigeelementes entgegen der Federkraft des Federelementes in einer Zwischenposition zwischen der Ruheposition und der Anzeigeposition ausgebildet ist;
+ Bereitstellen eines Gegensteckverbinders, wobei der Gegensteckverbinder einen Konus und eine Sicherungsnut aufweist;
+ Einstecken des Gegensteckverbinders in den Steckverbinder, wobei durch axiales Einschieben des Gegensteckverbinders in den Steckverbinder, das Arretierungselement und das erste Rastelement am Konus zur Anlage kommen und nach außen gedrückt werden, wobei bei einer ersten Einschiebtiefe des Gegensteckverbinders das Anzeigeelement aus einer Ruheposition in seine Zwischenposition verlagert wird, wobei in der Zwischenposition das zweite Rastelement mit dem Arretierungselement zusammenwirkt, und das Anzeigeelement durch das Arretierungselement in der Zwischenposition gehalten wird, wobei bei weiterem axialen Einschieben des Gegensteckverbinders in den Steckverbinder, das Arretierungselement in die Sicherungsnut einfällt und das zweite Rastelement freigegeben wird, wodurch das Anzeigeelement durch das Federelement in seine Anzeigeposition verschoben wird.

Das erfindungsgemäße Verfahren bringt den Vorteil mit sich, dass mittels des Anzeigeelementes signalisiert werden kann, dass der Gegensteckverbinder korrekt mit dem Steckverbinder gefügt ist. Insbesondere kann durch die erfindungsgemäßen Verfahrensschritte erreicht werden, dass das Anzeigeelement nur dann seine Anzeigeposition einnimmt, wenn der Gegensteckverbinder mit dem Steckverbinder gesteckt ist und gleichzeitig das Arretierungselement zur Sicherung des Gegensteckverbinders im Steckverbinder auch korrekt in der Sicherungsnut des Gegensteckverbinders eingerastet ist und somit ein unbeabsichtigtes Auseinanderziehen des Gegensteckverbinders und des Steckverbinders weiterstgehend unterbunden werden kann.

Darüber hinaus kann vorgesehen sein, dass eine erste Betätigungsnase des ersten Rastelementes in den Aufnahmeraum einragt, wobei beim axialen Einschieben des Gegensteckverbinders in den Steckverbinder die Betätigungsnase am Konus des Gegensteckverbinders anliegt und von diesem radial aus dem Aufnahmeraum hinausgedrängt wird, wobei dabei ein am ersten Rastelement angeordneter erster Rastvorsprung über eine am Verbinderkörper angeordnete erste Rastnase gehoben wird.

Weiters kann vorgesehen sein, dass das zweite Rastelement einen Rasthaken aufweist, welcher im Arretierungselement einhakt, wenn sich dieses in einer nach außen verschobenen Position befindet, wodurch das Anzeigeelement entgegen der Federkraft des Federelementes durch das Arretierungselement in der Zwischenposition gehalten wird.

Gemäß einer besonderen Ausprägung ist es möglich, dass der Steckverbinder derart dimensioniert ist, dass das erste Rastelement das Anzeigeelement wieder in seiner Ruheposition sichert, wenn der Gegensteckverbinder aus dem Steckverbinder herausgezogen wird, ohne dass das Arretierungselement in die Sicherungsnut eingefallen ist.

Ferner kann es zweckmäßig sein, wenn das Anzeigeelement eine Codierungsfläche aufweist, welche in der Anzeigeposition des Anzeigeelementes sichtbar und in der Ruheposition des Anzeigeelementes zumindest teilweise verdeckt ist, wobei die Codierungsfläche einen maschinenlesbaren Code, wie etwa einen Data Matrix Code, aufweist. Durch diese Maßnahme kann erreicht werden, dass nicht nur eine optische Kontrolle der korrekten Positionierung durch den Maschinenbediener erfolgen kann, sondern dass auch eine maschinenlesbare Kontrolle erfolgen kann bzw. dass die Information entsprechend abgespeichert werden kann.

Weiters ist es auch denkbar, dass die Information der maschinenlesbaren Kontrolle abgespeichert wird, und dazu genutzt wird, um weitere Fertigungsschritte freizugeben bzw. diese zu verhindern. Somit kann erreicht werden, dass ein Bedienerfehler weitestgehend ausgeschlossen werden kann.

Die Anzeigefläche kann gleichzeitig als Codierungsfläche dienen. Daher kann der maschinenlesbare Code direkt an der Anzeigefläche angeordnet sein.

Insbesondere kann es vorteilhaft sein, wenn die Anzeigefläche zumindest bereichsweise in einer entsprechenden Signalfarbe, wie etwa grün ausgebildet ist und/oder dass an der Anzeigefläche ein Schriftzug, wie etwa "OK" angeordnet ist. Durch diese Maßnahme kann erreicht werden, dass auch nicht fachkundige bzw. nicht geschulte Personen eine korrekte Arretierung des Arretierungselementes bzw. eine korrekte Fügung des Gegensteckverbinders mit dem Steckverbinder visuell erkannt werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Steckerbaugruppe in einem ungesteckten Zustand;
- Fig. 2: eine schematische Darstellung einer Steckerbaugruppe in einem gesteckten Zustand;
- Fig. 3: eine Detailansicht eines Anzeigeelementes zur Signalisierung eines korrekt gefügten Steckverbinders und Gegensteckverbinders der Steckerbaugruppe;
- Fig. 4: einen ersten Verfahrensschritt zum Stecken des Gegensteckverbinders in den Steckverbinder;
- Fig. 5: einen zweiten Verfahrensschritt zum Stecken des Gegensteckverbinders in den Steckverbinder;
- Fig. 6: einen dritten Verfahrensschritt zum Stecken des Gegensteckverbinders in den Steckverbinder;
- Fig. 7: einen vierten Verfahrensschritt zum Stecken des Gegensteckverbinders in den Steckverbinder;
- Fig. 8: einen fünften Verfahrensschritt zum Stecken des Gegensteckverbinders in den Steckverbinder.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

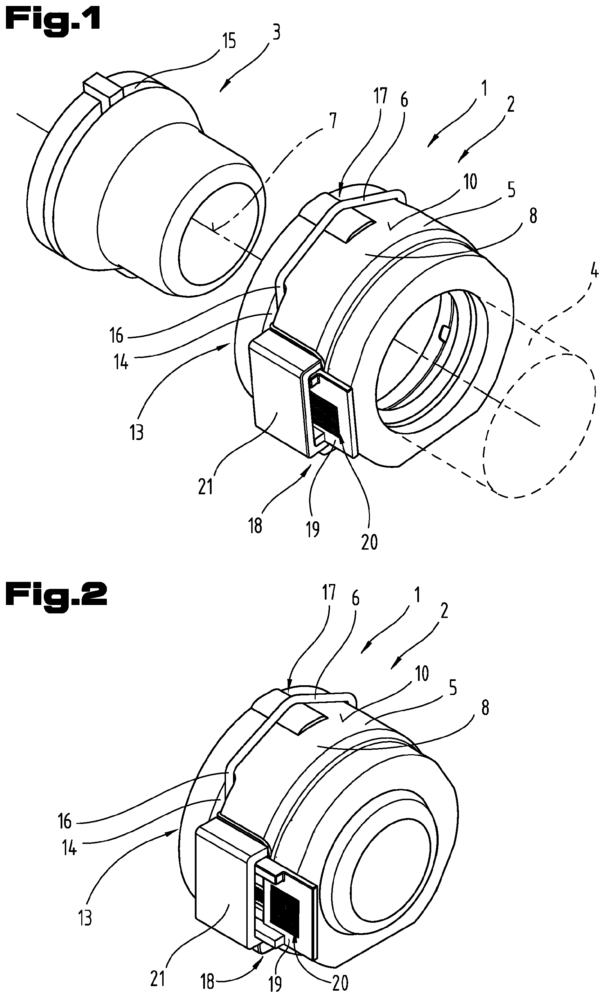

Fig. 1 zeigt eine perspektivische Ansicht einer Steckerbaugruppe 1 mit einem Steckverbinder 2. Weiters ist in Fig. 1 schematisch ein Gegensteckverbinder 3 dargestellt, welcher mit der Steckerbaugruppe 1 verbindbar ist. In der Ansicht nach Fig. 1 ist der Gegensteckverbinder 3 nicht in den Steckverbinder 2 eingesteckt. Das Zusammenwirken zwischen Steckerbaugruppe 1 und einem Gegensteckverbinder 3 ist in der AT 509 196 B1 hinlänglich beschrieben.

Weiters ist schematisch ein Rohr 4 dargestellt, an welches der Steckverbinder 2 gekoppelt sein kann. Das Rohr 4 kann beispielsweise ein starres Element, wie etwa ein Kunststoffrohr sein. In einer andern Ausführungsvariante kann das Rohr 4 als flexible Leitung aus einem Gummiwerkstoff ausgebildet sein.

Der Steckverbinder 2 umfasst einen Verbinderkörper 5, welcher vorzugsweise als Spritzgussteil, insbesondere aus einem Kunststoffwerkstoff gebildet ist.

Die Steckerbaugruppe 1 wird vorzugsweise in einem Kraftfahrzeug, insbesondere in einem straßengebundenen Kraftfahrzeug mit Verbrennungsmotor, wie etwa einem PKW oder einem LKW eingesetzt.

Natürlich ist es auch denkbar, dass die Steckerbaugruppe 1 in einer sonstigen Anwendung, insbesondere einer sonstigen Anwendung in einem Verbrennungsmotor verwendet wird. Dies kann beispielsweise der Einsatz der Steckerbaugruppe 1 in einem stationären Aggregat, in einem Schiffsmotor, in einem Flugzeugmotor, in einer Baumaschine usw. sein. Darüber hinaus kann die Steckerbaugruppe 1 beispielsweise auch bei Wasserleitungen einer Hausinstallation Anwendung finden.

Im Speziellen kann die Steckerbaugruppe 1 zum Verbinden verschiedener Bauteile der Frischluftzuführung zum Verbrennungsmotor eingesetzt werden. Beispielsweise kann vorgesehen sein, dass der Steckverbinder 2 mit dem entsprechenden Gegensteckverbinder 3 zur Verbindung zweier Teile im Ansaugbereich eines Turboladers vorgesehen ist. Weiters kann beispielsweise auch vorgesehen sein, dass eine derartige Steckerbaugruppe 1 in der vom Turbolader abgehenden Druckseite zur Verbindung zweier Bauteile eingesetzt wird. Weiters ist es auch denkbar, dass die Steckerbaugruppe 1 bei wasserführenden Bauteilen, wie etwa Kühlmittelschläuchen, insbesondere in einem Verbrennungsmotor eingesetzt wird.

Wie aus Fig. 1 weiters ersichtlich, ist vorgesehen, dass ein Arretierungselement 6 zum Sichern des Steckverbinders 2 und des Gegensteckverbinders 3 zueinander vorgesehen ist.

Das Arretierungselement 6 ist derart konstruiert, dass es leicht aktiviert und deaktiviert werden kann, sodass der Steckverbinder 2 und der Gegensteckverbinder 3 bedarfsweise voneinander getrennt bzw. miteinander verbunden werden können.

Das Arretierungselement 6 kann in eine Raststellung gebracht werden, in welcher der Steckverbinder 2 und der Gegensteckverbinder 3 zueinander gesichert sind.

Weiters kann das Arretierungselement 6 in eine Freigabestellung gebracht werden, in welcher der Gegensteckverbinder 3 in den Steckverbinder 2 eingesetzt oder aus diesem herausgenommen werden kann.

Insbesondere kann vorgesehen sein, dass das Arretierungselement 6 in Form eines Federelementes ausgebildet ist.

Wie aus Fig. 1 ersichtlich, kann vorgesehen sein, dass der Gegensteckverbinder 3 entlang einer Längsachse 7 des Steckverbinders 2 axial verschoben werden, um den Gegensteckverbinder 3 in den Steckverbinder 2 einzustecken.

Wie in Fig. 1 ersichtlich, kann vorgesehen sein, dass am Verbinderkörper 5 ein erster Mantelabschnitt 8 ausgebildet ist, welcher die zentrale Längsachse 7 des Steckverbinders 2 hülsenförmig umgibt.

Der erste Mantelabschnitt 8 kann eine innenliegende Mantelfläche 9 und eine außenliegende Mantelfläche 10 aufweisen.

Im Bereich des ersten Mantelabschnittes 8 weist der Steckverbinder 2 einen Aufnahmeraum 13 auf. Der Aufnahmeraum 13 kann vom ersten Mantelabschnitt 8 umgeben sein und zur Aufnahme eines Teils des Gegensteckverbinders 3 dienen.

Der Verbinderkörper 5 kann zwei einander gegenüberliegende Durchtrittsöffnungen 14 aufweisen, welche den ersten Mantelabschnitt 8 durchdringen. In der Raststellung des Arretierungselementes 6, welche dieses im eingesteckten und verrasteten Zustand einnimmt, ragt das Arretierungselement 6 durch die jeweilige Durchtrittsöffnung 14 in den Aufnahmeraum 13. Hierbei wirkt das Arretierungselement 6 mit einer Sicherungsnut 15 des Gegensteckverbinders 3 zusammen. Insbesondere ragt in der Raststellung des Arretierungselementes 6 das Arretierungselement 6 durch die Durchtrittsöffnungen 14 hindurch in die Sicherungsnut 15 des Gegensteckverbinders 3 hinein.

Darüber hinaus kann vorgesehen sein, dass das Arretierungselement 6 Rastbereiche 16 und einen Haltebereich 17 aufweist, an welchem es gegriffen werden kann, um in den Verbinderkörper 5 eingesetzt werden zu können und zwischen der Raststellung und der Freigabestellung bewegt werden zu können.

Wenn sich das Arretierungselement 6 in seiner Raststellung befindet ragen die Rastbereiche 16 in den Aufnahmeraum 13 und der Gegensteckverbinder 3 ist relativ zum Steckverbinder 2 axial gesichert. Insbesondere ist hierbei vorgesehen, dass die Rastbereiche 16 des Arretierungselementes 6 durch die Durchtrittsöffnungen 14 hindurch in die Sicherungsnut 15 des Gegensteckverbinders 3 hineinragen. Wenn sich das Arretierungselement 6 in seiner Freigabestellung befindet ragen die Rastbereiche 16 nicht in den Aufnahmeraum 13 und der Gegensteckverbinder 3 ist relativ zum Steckverbinder 2 axial verschiebbar.

Weiters kann ein Anzeigeelement 18 vorgesehen sein, welches zur Signalisierung dient, ob das Arretierungselement 6 korrekt arretiert ist.

Weiters kann vorgesehen sein, dass am Anzeigeelement 18 eine Anzeigefläche 19 ausgebildet ist.

Weiters kann vorgesehen sein, dass an der Anzeigefläche 19 des Anzeigeelementes 18 ein maschinenlesbarer Code 20 angeordnet ist.

Die Anzeigefläche 19 kann eine Signalisierungsfarbe, wie etwa eine grüne Farbe, aufweisen, um signalisieren zu können, dass das Arretierungselement 6 korrekt arretiert ist. Alternativ oder zusätzlich ist es auch denkbar, dass an der Anzeigefläche 19 ein Schriftzug angeordnet ist, oder dass die Anzeigefläche 19 entsprechend von einem Schriftzug durchsetzt ist, welcher ebenfalls das korrekte arretieren des Arretierungselementes 6 signalisiert.

In der Darstellung nach Fig. 1 befindet sich das Anzeigeelement 18 in einer Ruheposition, welche signalisiert, dass der Gegensteckverbinder 3 entweder gar nicht, oder nicht korrekt in den Steckverbinder 2 eingesteckt ist.

In der Fig. 2 ist der Steckverbinder 2 in einer weiteren perspektivischen Darstellung gezeigt, wobei der Gegensteckverbinder 3 in den Steckverbinder 2 eingesteckt ist und korrekt mit diesem arretiert ist, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In der Darstellung nach Fig. 2 befindet sich das Anzeigeelement 18 in einer Anzeigeposition, welche signalisiert, dass der Gegensteckverbinder 3 korrekt in den Steckverbinder 2 eingesteckt ist.

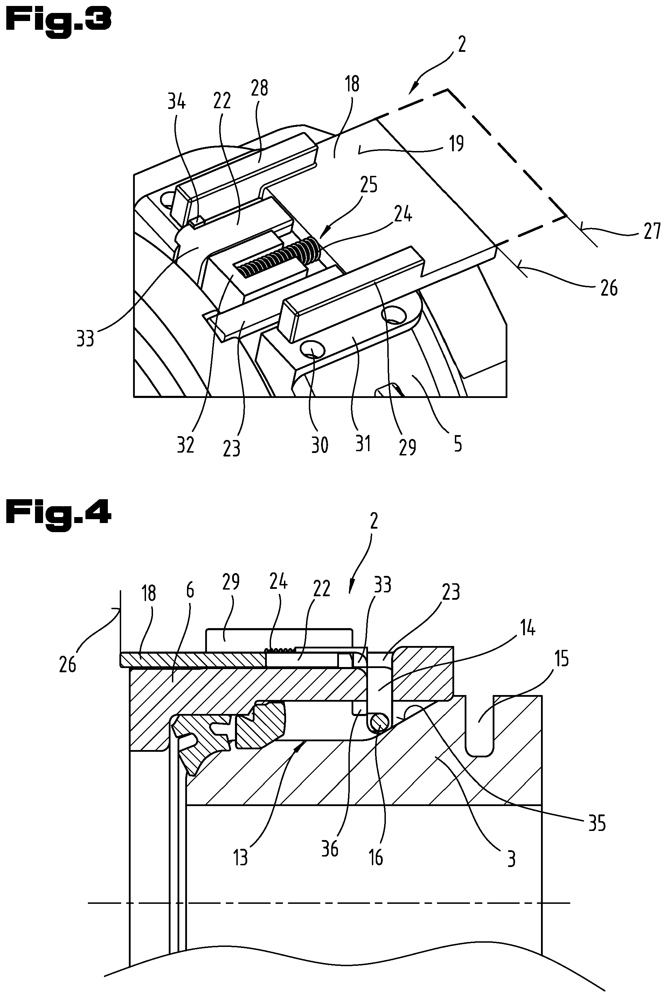

Die Funktionalität des Anzeigeelementes 18 bzw. die Überleitung von der Ruheposition in die Anzeigeposition des Anzeigeelementes 18 wird anhand der Figuren 4 bis 8 näher erklärt.

Wie in den Fig. 1 und 2 weiters ersichtlich, kann vorgesehen sein, dass eine Abdeckung 21 ausgebildet ist, welche zum Halten des Anzeigeelementes 18 am Verbinderkörper 5 dienen kann. Weiters kann vorgesehen sein, dass die Abdeckung 21 zum zumindest teilweisen verdecken der Anzeigefläche 19 in der Ruheposition des Anzeigeelementes dient. Die Abdeckung 21 kann in Form eines Spritzgussteiles ausgebildet sein. Weiters kann vorgesehen sein, dass die Abdeckung 21 mittels einer formschlüssigen Verbindung mit dem Verbinderkörper 5 gekoppelt ist bzw. an diesem aufgesteckt ist.

Fig. 3 zeigt eine Detailansicht des Steckverbinders 2, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Der Übersichtlichkeit halber ist in der Detailansicht in Fig. 3 die Abdeckung 21 nicht dargestellt. Dadurch wird das Innenleben des Anzeigeelementes 18 sichtbar. Wie aus Fig. 3 ersichtlich, kann vorgesehen sein, dass das Anzeigeelement 18 ein erstes Rastelement 23 aufweist. Weiters kann vorgesehen sein, dass das Anzeigeelement 18 ein zweites Rastelement 23 aufweist. Das erste Rastelement 22 und das zweite Rastelement 23 können als integrale Bestandteile des Anzeigeelementes 18 ausgebildet sein. Mit anderen Worten ausgedrückt, kann das erste Rastelement 22 und das zweite Rastelement 23 einteilig mit dem Anzeigeelement 18 ausgebildet sein.

In einer alternativen Ausführungsvariante kann vorgesehen sein, dass das erste Rastelement 22 und/oder das zweite Rastelement 23 als eigenständige Bauteile ausgebildet sind, welche mit dem Anzeigeelement 18 gekoppelt sind. Insbesondere können die Rastelemente 22, 23 mittels einer stoffschlüssigen Verbindung mit dem Anzeigeelement 18 gekoppelt sein.

Wie aus Fig. 3 weiters ersichtlich, kann vorgesehen sein, dass das erste Rastelement 22 und/oder das zweite Rastelement 23 als Bauteile mit einer länglichen Erstreckung ausgebildet sind. Dadurch kann das vom Anzeigeelement 18 entfernt liegende Ende des Rastelementes 22, 23 relativ zum Anzeigeelement 18 verschoben bzw. gebogen werden, wobei eine elastische Rückstellbarkeit des Rastelementes 22, 23 genutzt werden kann.

Wie aus Fig. 3 weiters ersichtlich, kann vorgesehen sein, dass das Anzeigeelement 18 mit einem Federelement 24 gekoppelt ist. Das Federelement 24 kann von einer Federelementführung 25 geführt werden. Insbesondere kann vorgesehen sein, dass die Federelementführung 25 in Form eines Zapfen bzw. Stiftes ausgebildet ist, welches am Anzeigeelement 18 angeordnet ist. Die Federelementführung 25 kann als integraler Bestandteil des Anzeigeelementes 18 ausgebildet sein. In einer alternativen Ausführungsvariante ist es auch denkbar, dass die Federelementführung 25 mit dem Anzeigeelement 18 gekoppelt ist. Mittels des Federelementes 24 kann das Anzeigeelement 18 von seiner Ruheposition 26, wie sie in Fig. 3 dargestellt ist, in eine Anzeigeposition 27 vorgespannt bzw. gedrängt werden. Mittels des ersten Rastelementes 22 kann das Anzeigeelement 18 in seiner Ruheposition 26 fixiert sein.

Wie aus Fig. 3 weiters ersichtlich, kann vorgesehen sein, dass am Anzeigeelement 18 eine erste Führungsschiene 28 angeordnet ist. Weiters kann vorgesehen sein, dass am Anzeigeelement 18 eine zweite Führungsschiene 29 angeordnet ist. Die Führungsschienen 28, 29 können zur geführten Verschiebung des Anzeigeelementes 18 dienen. Insbesondere kann vorgesehen sein, dass die Führungsschienen 28, 29 mit der Abdeckung 21 korrespondieren. Die Führungsschienen 28, 29 können einteilig mit dem Anzeigeelement 18 ausgebildet sein.

Wie aus Fig. 3 weiters ersichtlich, kann vorgesehen sein, dass am Verbinderkörper 5 des Steckverbinders 2 eine oder mehrere Aufnahmeöffnungen 30 ausgebildet sind, welche zur Aufnahme bzw. zum Halten der Abdeckung 21 dienen. Insbesondere kann vorgesehen sein, dass die Abdeckung 21 einen oder mehrere Stifte aufweist, welche in die Aufnahmeöffnung 30 eingesteckt werden. Insbesondere kann vorgesehen sein, dass ein Anzeigeelementhalter 31 ausgebildet ist, welcher zur Aufnahme des Anzeigeelementes 18 dienen kann. Die Aufnahmeöffnungen 30 können im Anzeigeelementhalter 31 angeordnet sein. Der Anzeigeelementhalter 31 kann mit dem Verbinderkörper 5 gekoppelt sein.

Weiters kann vorgesehen sein, dass ein Federelementgegenhalter 32 ausgebildet ist, welcher zur Anlage des Federelementes 24 dient. Der Federelementgegenhalter 32 kann positionsfest am Verbinderkörper 5 angeordnet sein. Insbesondere kann vorgesehen sein, dass der Federelementgegenhalter 32 am Anzeigeelementhalter 31 angeordnet ist. Weiters kann vorgesehen sein, dass der Federelementgegenhalter 32 am Anzeigeelementhalter 31 ausgebildet ist.

In einer Ausführungsvariante kann vorgesehen sein, dass das Anzeigeelement 18 als Spritzgussteil ausgebildet ist. Insbesondere kann vorgesehen sein, dass das Anzeigeelement 18, mit samt dem ersten Rastelement 22, dem zweiten Rastelement 23, der ersten Führungsschiene 28, der zweiten Führungsschiene 29 und der Federelementführung 25 einteilig als Spritzgussteil ausgebildet ist.

Ein derartiges Spritzgussteil kann beispielsweise aus einem thermoplastischen Kunststoff, wie Polyethylen gebildet sein.

Wie aus Fig. 3 weiters ersichtlich, kann vorgesehen sein, dass am ersten Rastelement 22 ein erster Rastvorsprung 33 ausgebildet ist. Insbesondere kann vorgesehen sein, dass der erste Rastvorsprung 33 am zum Anzeigeelement 18 distalen Ende des ersten Rastelementes 22 angeordnet ist.

Weiters kann vorgesehen sein, dass eine erste Rastnase 34 ausgebildet ist, welche mit dem ersten Rastvorsprung 33 korrespondiert. Die erste Rastnase 34 kann positionsfest am Verbinderkörper 5 angeordnet sein. Insbesondere ist es denkbar, dass die erste Rastnase 34 mit dem Anzeigeelementhalter 31 gekoppelt ist.

Wie aus Fig. 3 ersichtlich, kann vorgesehen sein, dass der erste Rastvorsprung 33 als seitlicher Vorsprung am ersten Rastelement 22 ausgebildet ist. Der erste Rastvorsprung 33 und die erste Rastnase 34 können, wenn sich das Anzeigeelement 18 in seiner Ruheposition 26 befindet, formschlüssig ineinandergreifen. Dadurch kann eine Verschiebung des Anzeigeelementes 18 von seiner Ruheposition 26 in die Anzeigeposition 27 unterbunden werden, solange der erste Rastvorsprung 33 und die erste Rastnase 34 ineinandergreifen bzw. in formschlüssiger Verbindung miteinander stehen.

In den Figuren 4 bis 8 sind einzelne Verfahrensschritte zum Einstecken des Gegensteckverbinders 3 in den Steckverbinder 2 gezeigt, wobei wiederum für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

In den Figuren 4 bis 8 ist zur verbesserten Darstellung der Verbinderkörper 5 außermittig geschnitten dargestellt. Der Gegensteckverbinder 3 hingegen ist mittig geschnitten dargestellt. Aus diesem Grund scheint es in der Schnittansicht so, als wäre der Gegensteckverbinder 3 im Durchmesser zu groß für den Verbinderkörper 5. Darüber hinaus ist eine Dichtung zwischen dem Verbinderkörper 5 und dem Gegensteckverbinder 3 schematisch dargestellt, wobei jedoch der Einfachheit halber die Verformung der Dichtung nicht berücksichtigt wurde und diese daher zeichnerisch nicht korrekt in den Gegensteckverbinder 3 einragt.

Fig. 4 zeigt einen ersten Verfahrensschritt zum Einstecken des Gegensteckverbinders 3 in den Steckverbinder 2. In der Darstellung nach Fig. 4 ist hierbei der Gegensteckverbinder 3 bereits im Aufnahmeraum 13 des Verbinderkörpers 5 aufgenommen. Der Rastbereich 16 des Arretierungselementes 6 befindet sich noch in seiner Ausgangsstellung, wobei der Rastbereich 16 bereits an einem Konus 35 des Gegensteckverbinders 3 anliegt.

Wie aus Fig. 4 ersichtlich, ist am Start des Fügevorganges das Anzeigeelement 18 durch den ersten Rastvorsprung 33 bzw. die erste Rastnase 34 in seiner Ruheposition 26 gehalten, wobei das Anzeigeelement 18 mittels des Federelementes 24 in Richtung seiner Anzeigeposition 27 vorgespannt bzw. gedrängt ist.

Wie aus Fig. 4 weiters ersichtlich, kann vorgesehen sein, dass am ersten Rastelement 22 eine erste Betätigungsnase 36 ausgebildet ist, welche in den Aufnahmeraum 13 einragt. Insbesondere kann vorgesehen sein, dass die erste Betätigungsnase 36 am vom Anzeigeelement 18 distalen Ende des ersten Rastelementes 22 angeordnet ist.

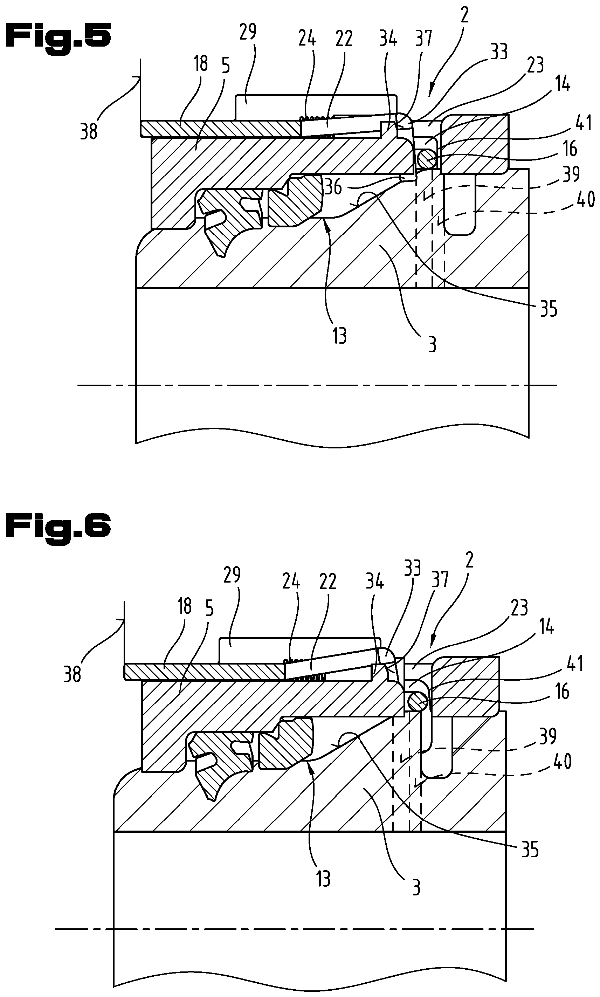

Fig. 5 zeigt einen weiteren Verfahrensschritt zum Einstecken des Gegensteckverbinders 3 in den Steckverbinder 2. Wie aus Fig. 5 ersichtlich, kann vorgesehen sein, dass durch das axiale Einstecken des Gegensteckverbinders 3 in den Steckverbinder 2 der Rastbereich 16 des Arretierungselementes 6, welcher am Konus 35 anliegt, mittels des Konus 35 angehoben wird. Darüber hinaus kann die erste Betätigungsnase 36 ebenfalls am Konus 35 zur Anlage kommen, wodurch das erste Rastelement 22 an dessen vom Anzeigeelement 18 distalen Ende radial nach außen gedrückt wird. Somit kommt es zu einer Verschiebung des ersten Rastvorsprunges 33 zur ersten Rastnase 34. Insbesondere kann vorgesehen sein, dass an der ersten Rastnase 34 eine Rastnasenschräge 37 ausgebildet ist, wobei der erste Rastvorsprung 33 ab einer gewissen Anhebehöhe an der Rastnasenschräge 37 anliegt. Durch die Rastnasenschräge 37 kommt es ab einer gewissen Anhebung des ersten Rastvorsprunges 33 zu einer Verschiebung des Anzeigeelementes 18 heraus aus der Ruheposition 26 in Richtung der Anzeigeposition 27. In der Darstellung nach Fig. 5 wird hierbei eine Zwischenposition 38 eingenommen. Hierbei kann vorgesehen sein, dass der Rastbereich 16 des Arretierungselementes 6 bereits soweit nach außen gedrückt ist, dass dieser an einem Übergangsradius 39 zwischen dem Konus 35 und dem Zylinderabschnitt 40 oder am Zylinderabschnitt 40 des Gegensteckverbinders 3 anliegt. Wie aus Fig. 5 weiters ersichtlich, kann vorgesehen sein, dass am zweiten Rastelement 23 ein Rasthaken 41 angeordnet ist. Der Rasthaken 41 kann am vom Anzeigeelement 18 distalen Ende des zweiten Rastelementes 23 angeordnet sein. Insbesondere kann vorgesehen sein, dass im Zustand, wie er in Fig. 5 dargestellt und beschrieben ist, der Rasthaken 41 des zweiten Rastelementes 23 am Rastbereich 16 des Arretierungselementes 6 anliegt.

Somit kann durch den Rasthaken 41 eine weitere Verschiebung des Anzeigeelementes 18 in seine Anzeigeposition 27 vorerst unterbunden werden.

Fig. 6 zeigt eine weitere Position beim Einsteckvorgang des Gegensteckverbinders 3 in den Steckverbinder 2.

Wie aus Fig. 6 ersichtlich, kann vorgesehen sein, dass beim weiteren Fügen des Gegensteckverbinders 3 in den Steckverbinder 2 die erste Betätigungsnase 36 weiter durch den Konus 35 radial nach außen gedrängt wird. Im Zustand nach Fig. 6 kann die erste Betätigungsnase 36 am Übergangsradius 39 anliegen. Weiters kann gleichzeitig der Rastbereich 16 des Arretierungselementes 6 am Zylinderabschnitt 40 des Gegensteckverbinders 3 anliegen. Der erste Rastvorsprung 33 kann hierbei bereits soweit radial nach außen gedrängt sein, dass dieser nicht mehr an der ersten Rastnase 34 anliegt und somit das Anzeigeelement 18 zur Gänze vom Rasthaken 41 in seiner Zwischenposition 38 gehalten wird.

Insbesondere kann vorgesehen sein, dass das Anzeigeelement 18 und der Gegensteckverbinder 3 in Relation zueinander so dimensioniert sind, dass wenn der Gegensteckverbinder 3 aus einer Position, wie er in Fig. 6 dargestellt ist, wieder axial aus dem Steckverbinder 2 herausgezogen wird. Die erste Betätigungsnase 36 des ersten Rastelementes 22 wieder am Konus 35 nach unten gleitet, wodurch der erste Rastvorsprung 33 wieder mit der ersten Rastnase 34 in Eingriff kommt und durch die Elastizität bzw. die elastische Spannung des ersten Rastelementes 22 rückwärts zum Einsteckvorgang das Anzeigeelement 18 wieder in seine Ruheposition 26 gedrückt wird.

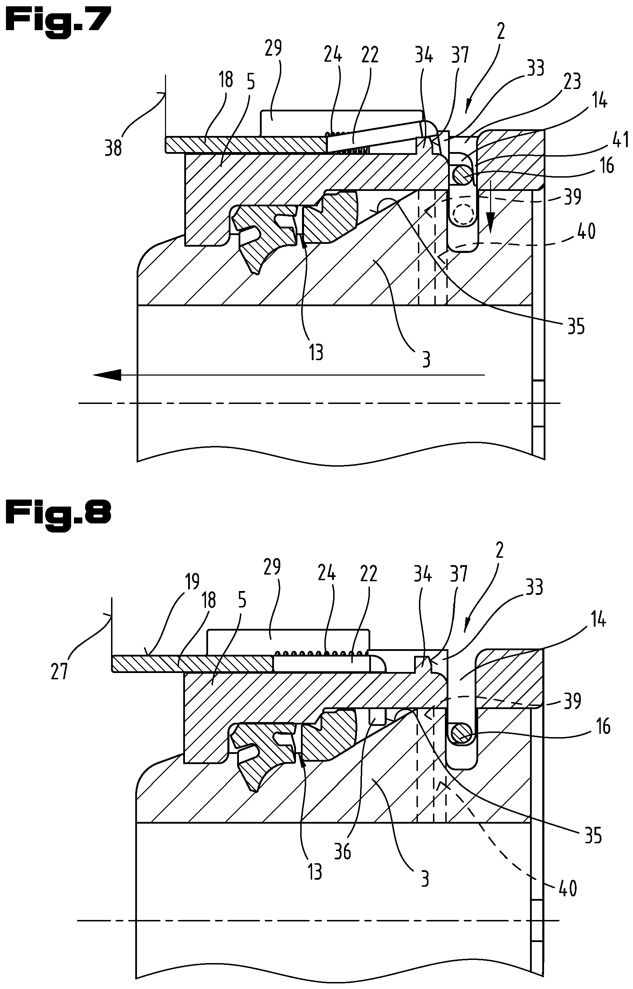

Wenn, wie aus Fig. 7 ersichtlich, der Gegensteckverbinder 3 nun soweit in den Steckverbinder 2 eingesteckt ist, dass sich der Rastbereich 16 des Arretierungselementes 6 oberhalb der Sicherungsnut 15 befindet, so fällt der Rastbereich 16 des Arretierungselementes 6 aufgrund der elastischen Vorspannung des Arretierungselementes 6 in die Sicherungsnut 15 ein. Dadurch kommt der Rastbereich 16 aus dem Rasthaken 41 des zweiten Rastelementes 23 außer Eingriff. Somit ist das Anzeigeelement 18 zur Verschiebung in seine Anzeigeposition 27 durch die Kraft des Federelementes 24 freigegeben. Da in der Position nach Fig. 7 die erste Betätigungsnase 36 des ersten Rastelementes 22 am Zylinderabschnitt 40 des Gegensteckverbinders 3 anliegt und somit der erste Rastvorsprung 33 radial außerhalb die erste Rastnase 34 gedrückt ist, wird auch vom ersten Rastelement 22 kein Widerstand der Verschiebung des Anzeigeelementes 18 in seine Anzeigeposition 27 gesetzt.

In der Darstellung nach Fig. 8 ist die korrekt gefügte und korrekt verriegelte Position des Gegensteckverbinders 3 im Steckverbinder 2 gezeigt. Wie aus Fig. 8 ersichtlich, ist hierbei der Rastbereich 16 des Arretierungselements 6 in der Sicherungsnut 15 aufgenommen. Weiters ist das Anzeigeelement 18 in der Anzeigeposition 27 positioniert. Das erste Rastelement 22 kann hierbei durch dessen Elastizität in dessen unverformter Ausgangslage zurückgeschoben sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Steckerbaugruppe | 30 | Aufnahmeöffnung |
| | | 31 | Anzeigeelementhalter |
| 2 | Steckverbinder | 32 | Federelementgegenhalter |
| 3 | Gegensteckverbinder | 33 | erster Rastvorsprung |
| 4 | Rohr | 34 | erste Rastnase |
| 5 | Verbinderkörper | 35 | Konus |
| 6 | Arretierungselement | 36 | erste Betätigungsnase |
| 7 | Längsachse des Steckverbinders | 37 | Rastnasenschräge |
| 8 | erster Mantelabschnitt | 38 | Zwischenposition |
| 9 | innenliegende Mantelfläche | 39 | Übergangsradius |
| 10 | außenliegende Mantelfläche | 40 | Zylinderabschnitt |
| 11 | Dichtungsaufnahme Steckverbinder | 41 | Rasthaken |
| 12 | Ringraum | | |
| 13 | Aufnahmeraum | | |
| 14 | Durchtrittsöffnung | | |
| 15 | Sicherungsnut | | |
| 16 | Rastbereich | | |
| 17 | Haltebereich | | |
| 18 | Anzeigeelement | | |
| 19 | Anzeigefläche | | |
| 20 | Code | | |
| 21 | Abdeckung | | |
| 22 | erstes Rastelement | | |
| 23 | zweites Rastelement | | |
| 24 | Federelement | | |
| 25 | Federelementführung | | |
| 26 | Ruheposition | | |
| 27 | Anzeigeposition | | |
| 28 | erste Führungsschiene | | |
| 29 | zweite Führungsschiene | | |

## Patentansprüche

1. Steckverbinder (2) zum Verbinden von Leitungen für flüssige oder gasförmige Medien, umfassend:
- einen Verbinderkörper (5), welcher zumindest einen ersten Mantelabschnitt (8) aufweist, welcher einen Aufnahmeraum (13) zur Aufnahme eines Teils eines Gegensteckverbinders (3) bildet, wobei im ersten Mantelabschnitt (8) zumindest zwei Durchtrittsöffnungen (14) ausgebildet sind;
- ein Arretierungselement (6), welches zum Sichern des Steckverbinders (2) relativ zum Gegensteckverbinder (3) vorgesehen ist, wobei die Durchtrittsöffnungen (14) im Verbinderkörper (5) zur Aufnahme des Arretierungselementes (6) dienen,
wobei
ein Anzeigeelement (18) ausgebildet ist, welches eine Anzeigefläche (19) aufweist, wobei das Anzeigeelement (18) zwischen einer Ruheposition (26), in der die Anzeigefläche (19) zumindest teilweise verdeckt ist, und einer Anzeigeposition (27), in der die Anzeigefläche (19) sichtbar ist, verschiebbar ist, wobei ein Federelement (24) ausgebildet ist, welches das Anzeigeelement (18) in Richtung der Anzeigeposition (27) vorspannt und wobei das Anzeigeelement (18) mit einem ersten Rastelement (22) gekoppelt ist, wobei das erste Rastelement (22) zum Halten des Anzeigeelementes (18) entgegen der Federkraft des Federelementes (24) in der Ruheposition (26) ausgebildet ist, **dadurch gekennzeichnet, dass** das Anzeigeelement (18) mit einem zweiten Rastelement (23) gekoppelt ist, wobei das zweite Rastelement (23) zum Halten des Anzeigeelementes (18) entgegen der Federkraft des Federelementes (24) in einer Zwischenposition (38) zwischen der Ruheposition (26) und der Anzeigeposition (27) ausgebildet ist.

2. Steckverbinder (2) nach Anspruch 1, **dadurch gekennzeichnet, dass** das erste Rastelement (22) einen ersten Rastvorsprung (33) aufweist und dass am Verbinderkörper (5) eine erste Rastnase (34) ausgebildet ist, wobei im ungesteckten Zustand des Steckverbinders (2) der erste Rastvorsprung (33) mit der ersten Rastnase (34) in Eingriff steht und entgegen der Federkraft des Federelementes (24) in der Ruheposition (26) gehalten ist.

3. Steckverbinder (2) nach Anspruch 1 oder 2, **dadurch gekennzeichnet, dass** das erste Rastelement (22) eine erste Betätigungsnase (36) aufweist, wobei die Betätigungsnase (36) in den Aufnahmeraum (13) einragt.

4. Steckverbinder (2) nach Anspruch 3, **dadurch gekennzeichnet, dass** die erste Betätigungsnase (36) so weit in den Aufnahmeraum (13) einragt, dass wenn die Betätigungsnase (36) radial aus dem Aufnahmeraum (13) hinausgedrängt ist, der erste Rastvorsprung (33) über die erste Rastnase (34) gehoben ist.

5. Steckverbinder (2) nach einem der vorhergehenden Ansprüche, **dadurch gekennzeichnet, dass** das zweite Rastelement (23), beim Halten des Anzeigeelementes (18) in der Zwischenposition (38), am Arretierungselement (6) anliegt.

6. Steckverbinder (2) nach Anspruch 5, **dadurch gekennzeichnet, dass** das zweite Rastelement (23) einen Rasthaken (41) aufweist, welcher derart ausgebildet ist, dass er zum Einhaken im Arretierungselement (6) in einer nach außen verschobenen Position des Arretierungselementes (6) dient.

7. Verfahren zum Herstellen einer Steckverbindung mittels eines Steckverbinders (2), insbesondere mittels eines Steckverbinders (2) nach einem der vorhergehenden Ansprüche, **gekennzeichnet durch** die Verfahrensschritte:
+ Bereitstellen des Steckverbinders (2) umfassend
- einen Verbinderkörper (5), welcher zumindest einen ersten Mantelabschnitt (8) aufweist, welcher einen Aufnahmeraum (13) zur Aufnahme eines Teils eines Gegensteckverbinders (3) bildet, wobei im ersten Mantelabschnitt (8) zumindest zwei Durchtrittsöffnungen (14) ausgebildet sind;
- ein Arretierungselement (6), welches zum Sichern des Steckverbinders (2) relativ zum Gegensteckverbinder (3) vorgesehen ist, wobei die Durchtrittsöffnungen (14) im Verbinderkörper (5) zur Aufnahme des Arretierungselementes (6) dienen;
- ein Anzeigeelement (18), welches eine Anzeigefläche (19) aufweist, wobei das Anzeigeelement (18) zwischen einer Ruheposition (26), in der die Anzeigefläche (19) zumindest teilweise verdeckt ist, und einer Anzeigeposition (27), in der die Anzeigefläche (19) sichtbar ist, verschiebbar ist, wobei ein Federelement (24) ausgebildet ist, welches das Anzeigeelement (18) in Richtung der Anzeigeposition (27) vorspannt, wobei das Anzeigeelement (18) mit einem ersten Rastelement (22) und einem zweiten Rastelement (23) gekoppelt ist, wobei das erste Rastelement (22) zum Halten des Anzeigeelementes (18) entgegen der Federkraft des Federelementes (24) in der Ruheposition (26) ausgebildet ist und wobei das zweite Rastelement (23) zum Halten des Anzeigeelementes (18) entgegen der Federkraft des Federelementes (24) in einer Zwischenposition (38) zwischen der Ruheposition (26) und der Anzeigeposition (27) ausgebildet ist;
+ Bereitstellen eines Gegensteckverbinders (3), wobei der Gegensteckverbinder (3) einen Konus (35) und eine Sicherungsnut (15) aufweist;
+ Einstecken des Gegensteckverbinders (3) in den Steckverbinder (2), wobei durch axiales Einschieben des Gegensteckverbinders (3) in den Steckverbinder (2), das Arretierungselement (6) und das erste Rastelement (22) am Konus (35) zur Anlage kommen und nach außen gedrückt werden, wobei bei einer ersten Einschiebtiefe des Gegensteckverbinders (3) das Anzeigeelement (18) aus einer Ruheposition (26) in seine Zwischenposition (38) verlagert wird, wobei in der Zwischenposition (38) das zweite Rastelement (23) mit dem Arretierungselement (6) zusammenwirkt, und das Anzeigeelement (18) durch das Arretierungselement (6) in der Zwischenposition (38) gehalten wird, wobei bei weiterem axialen Einschieben des Gegensteckverbinders (3) in den Steckverbinder (2), das Arretierungselement (6) in die Sicherungsnut (15) einfällt und das zweite Rastelement (23) freigegeben wird, wodurch das Anzeigeelement (18) durch das Federelement (24) in seine Anzeigeposition (27) verschoben wird.

8. Verfahren nach Anspruch 7, **dadurch gekennzeichnet, dass** eine erste Betätigungsnase (36) des ersten Rastelementes (22) in den Aufnahmeraum (13) einragt, wobei beim axialen Einschieben des Gegensteckverbinders (3) in den Steckverbinder (2) die Betätigungsnase (36) am Konus (35) des Gegensteckverbinders (3) anliegt und von diesem radial aus dem Aufnahmeraum (13) hinausgedrängt wird, wobei dabei ein am ersten Rastelement (22) angeordneter erster Rastvorsprung (33) über eine am Verbinderkörper (5) angeordnete erste Rastnase (34) gehoben wird.

9. Verfahren nach Anspruch 7 oder 8, **dadurch gekennzeichnet, dass** das zweite Rastelement (23) einen Rasthaken (41) aufweist, welcher im Arretierungselement (6) einhakt, wenn sich dieses in einer nach außen verschobenen Position befindet, wodurch das Anzeigeelement (18) entgegen der Federkraft des Federelementes (24) durch das Arretierungselement (6) in der Zwischenposition (38) gehalten wird.

10. Verfahren nach einem der Ansprüche 7 bis 9, **dadurch gekennzeichnet, dass** der Steckverbinder (2) derart dimensioniert ist, dass das erste Rastelement (22) das Anzeigeelement (18) wieder in seiner Ruheposition (26) sichert, wenn der Gegensteckverbinder (3) aus dem Steckverbinder (2) herausgezogen wird, ohne dass das Arretierungselement (6) in die Sicherungsnut (15) eingefallen ist.

## Claims

1. A plug connector (2) for connecting lines for liquid or gaseous media, comprising:
- a connector body (5) which has at least a first casing section (8) which forms a receiving space (13) for receiving a part of a mating plug connector (3), wherein at least two passages (14) are formed in the first casing section (8);
- a locking element (6) which is provided for securing the plug connector (2) relative to the mating plug connector (3), wherein the passages (14) in the connector body (5) serve to accommodate the locking element (6),
wherein
an indicator element (18) is formed which has an indicator surface (19), wherein the indicator element (18) is displaceable between a rest position (26), in which the indicator surface (19) is at least partly covered, and an indicator position (27), in which the indicator surface (19) is visible, wherein a spring element (24) is formed which pretensions the indicator element (18) in the direction of the indicator position (27) and wherein the indicator element (18) is coupled to a first latching element (22), wherein the first latching element (22) is configured to hold the indicator element (18) in the rest position (26) against the spring force of the spring element (24), **characterized in that** the indicator element (18) is coupled to a second latching element (23), wherein the second latching element (23) is configured to hold the indicator element (18) in an intermediate position (38) between the rest position (26) and the indicator position (27) against the spring force of the spring element (24).

2. The plug connector (2) according to claim 1, **characterized in that** the first latching element (22) has a first latching projection (33) and that a first latching lug (34) is formed that on the connector body (5), wherein the first latching projection (33) is in engagement with the first latching lug (34) in the unplugged state of the plug connector (2) and is held in the rest position (26) against the spring force of the spring element (24).

3. The plug connector (2) according to claim 1 or 2, **characterized in that** the first latching element (22) comprises a first actuating lug (36), wherein the actuating lug (36) projects into the receiving space (13).

4. The plug connector (2) according to claim 3, **characterized in that** the first actuating lug (36) protrudes so far into the receiving space (13) that when the actuating lug (36) is pushed radially out of the receiving space (13), the first latching projection (33) is raised above the first latching lug (34).

5. The plug connector (2) according to one of the preceding claims, **characterized in that** the second latching element (23) rests against the locking element (6) when the indicator element (18) is held in the intermediate position (38).

6. The plug connector (2) according to claim 5, **characterized in that** the second latching element (23) has a latching hook (41) which is configured in such a way that it serves to hook into the locking element (6) in an outwardly displaced position of the locking element (6).

7. A method for producing a plug connection by means of a plug connector (2), in particular by means of a plug connector (2) according to one of the preceding claims, **characterized by** the method steps:
+ providing the plug connector (2) comprising
- a connector body (5) which has at least a first casing section (8) which forms a receiving space (13) for receiving a part of a mating plug connector (3), wherein at least two passages (14) are formed in the first casing section (8);
- a locking element (6) which is provided for securing the plug connector (2) relative to the mating plug connector (3), wherein the passages (14) in the connector body (5) serve to accommodate the locking element (6);
- an indicator element (18) which has an indicator surface (19), wherein the indicator element (18) is displaceable between a rest position (26), in which the indicator surface (19) is at least partly covered, and an indicator position (27), in which the indicator surface (19) is visible, wherein a spring element (24) is formed which pretensions the indicator element (18) in the direction of the indicator position (27), wherein the indicator element (18) is coupled to a first latching element (22) and a second latching element (23), wherein the first latching element (22) is configured to hold the indicator element (18) in the rest position (26) against the spring force of the spring element (24) and wherein the second latching element (23) is configured to hold the indicator element (18) in an intermediate position (38) between the rest position (26) and the indicator position (27) against the spring force of the spring element (24);
+ providing a mating plug connector (3), wherein the mating plug connector (3) has a cone (35) and a securing groove (15);
+ inserting the mating plug connector (3) into the plug connector (2), wherein the locking element (6) and the first latching element (22) come to rest on the cone (35) and are pressed outwards by axial insertion of the mating plug connector (3) into the plug connector (2), wherein the indicator element (18) is displaced from a rest position (26) into its intermediate position (38) at a first insertion depth of the mating plug connector (3), wherein in the intermediate position (38), the second latching element (23) cooperates with the locking element (6), and the indicator element (18) is held in the intermediate position (38) by the locking element (6), wherein upon further axial insertion of the mating plug connector (3) into the plug connector (2), the locking element (6) falls into the securing groove (15) and the second latching element (23) is released, whereby the indicator element (18) is displaced into its indicator position (27) by the spring element (24).

8. The method according to claim 7, **characterized in that** a first actuating lug (36) of the first latching element (22) protrudes into the receiving space (13), wherein during axial insertion of the mating plug connector (3) into the plug connector (2), the actuating lug (36) rests against the cone (35) of the mating plug connector (3) and is pushed radially out of the receiving space (13) by the latter, wherein, in this process, a first latching projection (33) arranged on the first latching element (22) is lifted over a first latching lug (34) arranged on the connector body (5).

9. The method according to claim 7 or 8, **characterized in that** the second latching element (23) has a latching hook (41) which hooks into the locking element (6) when the latter is in an outwardly displaced position, whereby the indicator element (18) is held in the intermediate position (38) by the locking element (6) against the spring force of the spring element (24).

10. The method according to one of claims 7 to 9, **characterized in that** the plug connector (2) is dimensioned in such a way that the first latching element (22) secures the indicator element (18) in its rest position (26) again when the mating plug connector (3) is pulled out of the plug connector (2) without the locking element (6) having fallen into the securing groove (15).

## Revendications

1. Connecteur mâle (2) pour raccorder des conduites pour des fluides liquides ou gazeux comprenant :
- un corps de connecteur (5) qui présente au moins une première partie d'enveloppe (8) qui forme un espace de réception (13) destiné à recevoir une partie d'un connecteur femelle (3), au moins deux ouvertures de passage (14) étant formées dans la première partie d'enveloppe (8) ;
- un élément de blocage (6) qui est prévu pour bloquer le connecteur mâle (2) par rapport au connecteur femelle (3), les ouvertures de passage (14) dans le corps de connecteur (5) servant à recevoir l'élément de blocage (6),
un élément d'affichage (18) est formé, qui présente une surface d'affichage (19), l'élément d'affichage (18) pouvant être déplacé entre une position de repos (26), dans laquelle la surface d'affichage (19) est au moins partiellement recouverte, et une position d'affichage (27), dans laquelle la surface d'affichage (19) est visible, un élément à ressort (24) étant formé, qui sollicite l'élément d'affichage (18) en direction de la position d'affichage (27), et l'élément d'affichage (18) étant couplé à un premier élément d'encliquetage (22), le premier élément d'encliquetage (22) étant conçu pour maintenir l'élément d'affichage (18) dans la position de repos (26) à l'encontre de la force élastique de l'élément à ressort (24), **caractérisé en ce que** l'élément d'affichage (18) est couplé à un deuxième élément d'encliquetage (23), le deuxième élément d'encliquetage (23) étant conçu pour maintenir l'élément d'affichage (18) à l'encontre de la force élastique de l'élément à ressort (24) dans une position intermédiaire (38) entre la position de repos (26) et la position d'affichage (27).

2. Connecteur mâle (2) selon la revendication 1, **caractérisé en ce que** le premier élément d'encliquetage (22) présente une première saillie d'encliquetage (33) et **en ce qu'**un premier ergot d'encliquetage (34) est formé sur le corps de connecteur (5), dans lequel, à l'état non enfiché du connecteur mâle (2), la première saillie d'encliquetage (33) est en prise avec le premier ergot d'encliquetage (34) et est maintenue dans la position de repos (26) à l'encontre de la force élastique de l'élément à ressort (24).

3. Connecteur mâle (2) selon la revendication 1 ou 2, **caractérisé en ce que** le premier élément d'encliquetage (22) présente un premier ergot d'actionnement (36), l'ergot d'actionnement (36) faisant saillie dans l'espace de réception (13).

4. Connecteur mâle (2) selon la revendication 3, **caractérisé en ce que** le premier ergot d'actionnement (36) fait saillie dans l'espace de réception (13) de telle sorte que, lorsque l'ergot d'actionnement (36) est poussé radialement hors de l'espace de réception (13), la première saillie d'encliquetage (33) est soulevée au-dessus du premier ergot d'encliquetage (34).

5. Connecteur mâle (2) selon l'une des revendications précédentes, **caractérisé en ce que** le deuxième élément d'encliquetage (23), lorsque l'élément d'affichage (18) est maintenu dans la position intermédiaire (38), repose contre l'élément de blocage (6).

6. Connecteur mâle (2) selon la revendication 5, **caractérisé en ce que** le deuxième élément d'encliquetage (23) présente un crochet d'encliquetage (41) qui est conçu de telle sorte qu'il sert à s'accrocher dans l'élément de blocage (6) dans une position décalée vers l'extérieur de l'élément de blocage (6).

7. Procédé de fabrication d'une connexion mâle au moyen d'un connecteur mâle (2), en particulier au moyen d'un connecteur mâle (2) selon l'une des revendications précédentes, **caractérisé par** les étapes suivantes :
+ mise à disposition du connecteur mâle (2) comprenant
- un corps de connecteur (5) qui présente au moins une première partie d'enveloppe (8) qui forme un espace de réception (13) destiné à recevoir une partie d'un connecteur femelle (3), au moins deux ouvertures de passage (14) étant formées dans la première partie d'enveloppe (8) ;
- un élément de blocage (6) qui est prévu pour bloquer le connecteur mâle (2) par rapport au connecteur femelle (3), les ouvertures de passage (14) dans le corps de connecteur (5) servant à recevoir l'élément de blocage (6) ;
- un élément d'affichage (18) qui présente une surface d'affichage (19), l'élément d'affichage (18) pouvant être déplacé entre une position de repos (26) dans laquelle la surface d'affichage (19) est au moins partiellement masquée, et une position d'affichage (27) dans laquelle la surface d'affichage (19) est visible, un élément à ressort (24) étant formé, qui sollicite l'élément d'affichage (18) en direction de la position d'affichage (27), l'élément d'affichage (18) étant couplé à un premier élément d'encliquetage (22) et à un deuxième élément d'encliquetage (23), le premier élément d'encliquetage (22) étant conçu pour maintenir l'élément d'affichage (18) dans la position de repos (26) à l'encontre de la force élastique de l'élément à ressort (24) et le deuxième élément d'encliquetage (23) étant conçu pour maintenir l'élément d'affichage (18) dans une position intermédiaire (38) entre la position de repos (26) et la position d'affichage (27) à l'encontre de la force élastique de l'élément à ressort (24) ;
+ mise à disposition d'un connecteur femelle (3), le connecteur femelle (3) présentant un cône (35) et une rainure de sécurité (15) ;
+ insertion du connecteur femelle (3) dans le connecteur mâle (2), l'élément de blocage (6) et le premier élément d'encliquetage (22) venant en appui sur le cône (35) et étant poussés vers l'extérieur lors de l'insertion axiale du connecteur femelle (3) dans le connecteur mâle (2), l'élément d'affichage (18) étant déplacé d'une position de repos (26) dans sa position intermédiaire (38) pour une première profondeur d'insertion du connecteur femelle (3),
le deuxième élément d'encliquetage (23) coopérant avec l'élément de blocage (6) et l'élément d'affichage (18) dans la position intermédiaire (38) et l'élément d'affichage (18) étant maintenu par l'élément de blocage (6) dans la position intermédiaire (38), l'élément de blocage (6) s'enclenchant dans la rainure de sécurité (15) et le deuxième élément d'encliquetage (23) étant libéré lors de l'insertion axiale supplémentaire du connecteur femelle (3) dans le connecteur mâle (2), ce qui permet à l'élément d'affichage (18) d'être déplacé par l'élément à ressort (24) dans sa position d'affichage (27).

8. Procédé selon la revendication 7, **caractérisé en ce qu'**un premier ergot d'actionnement (36) du premier élément d'encliquetage (22) fait saillie dans l'espace de réception (13), lors de l'insertion axiale du connecteur femelle (3) dans le connecteur mâle (2), l'ergot d'actionnement (36) s'appuyant contre le cône (35) du connecteur femelle (3) et étant poussé radialement hors de l'espace de réception (13), une première saillie d'encliquetage (33) agencée sur le premier élément d'encliquetage (22) étant soulevée par un premier ergot d'encliquetage (34) agencé sur le corps de connecteur (5).

9. Procédé selon la revendication 7 ou 8, **caractérisé en ce que** le deuxième élément d'encliquetage (23) présente un crochet d'encliquetage (41) qui s'accroche dans l'élément de blocage (6) lorsque celui-ci se trouve dans une position déplacée vers l'extérieur, de sorte que l'élément d'affichage (18) est maintenu dans la position intermédiaire (38) par l'élément de blocage (6) à l'encontre de la force élastique de l'élément à ressort (24).

10. Procédé selon l'une des revendications 7 à 9, **caractérisé en ce que** le connecteur mâle (2) est dimensionné de telle sorte que le premier élément d'encliquetage (22) bloque à nouveau l'élément d'affichage (18) dans sa position de repos (26) lorsque le connecteur femelle (3) est retiré du connecteur mâle (2) sans que l'élément de blocage (6) ne se soit enclenché dans la rainure de sécurité (15).
